# EUROPEAN PATENT SPECIFICATION

(11) **EP 3 000 353 B1**
(45) Date of publication and mention of the grant of the patent: **08.07.2020**
(21) Application number: 13885174.6
(22) Date of filing: 12.08.2013
(51) Int. Cl.: A47B 13/08, A47B 3/091, A47B 13/02

(54) **BLOW MOLDING PANEL WITH STRENGTHENED EDGE AND FOLDING TABLE APPLYING SAME**
BLASFORMUNG EINER PLATTE MIT VERSTÄRKTEN KANTEN UND KLAPPTISCH DAMIT
PANNEAU MOULÉ PAR SOUFFLAGE DOTÉ D'UN BORD RENFORCÉ ET TABLE PLIANTE L'UTILISANT

(30) Priority: 23.05.2013 CN 201310195287
(43) Date of publication of application: 30.03.2016
(73) Proprietor: Jiang, Yixiang, Yuyao, Zhejiang 315400 (CN)
(72) Inventor: Jiang, Yixiang, Yuyao, Zhejiang 315400 (CN)
(74) Representative: Orr, Robert
(86) International application number: PCT/CN2013/000946
(87) International publication number: WO 2014/186922

(56) References cited:
- WO-A1-90/00874
- CN-A- 1 642 461
- CN-A- 102 293 518
- CN-A- 102 293 518
- CN-C- 100 502 723
- CN-Y- 2 517 302
- CN-Y- 2 517 302
- CN-Y- 201 001 495
- CN-Y- 201 290 436
- US-A- 4 951 576
- US-A- 6 058 853
- US-A1- 2004 255 829
- US-A1- 2013 081 560

## Description

### Field of the Invention

The present invention relates to a panel and a folding table thereof, in particular to a blow-molded panel with reinforced edges and a folding table.

### Description of the Prior Art

Blow-molded products have the advantages of light weight due to their hollow structure, as well as high rigidity, good shock resistance, difficult to damage and the like due to their material, shape and structure. Recently, blow-molded products have been widely applied in a number of fields. For example, there are various blow-molded tables, blow-molded chairs, blow-molded stools and the like, as outdoor furniture articles.

Now, taking a blow-molded table as example, such a blow-molded table is usually formed from a blow-molded panel and a folding iron support, and numerous recessed support touch points, which are irregularly arranged and are of different shapes and sizes, are generally distributed on the bottom of the blow-molded panel for purpose of enhancing its strength. However, due to the limitations of the blow molding process, the panel often has some potential fault points to be easily damaged. For example, the material at the recessed support touch points becomes thinner after being stretched, particularly the edges (particularly corners) of the panel is relatively thin and soft, and thus these parts are likely to crack. To overcome the above problem, it is often to increase the thickness of the panel to enhance its structural strength. However, with the use of a thickened panel, the panel appears relatively thick and heavy. Accordingly, a blow-molded table having a thickened panel is heavy, and also not favor of saving cost. Moreover, even though a thickened panel is used, it is also unable to improve the rigidity and structural strength of the edges of the panel if no improvement is given to the structure of edges.

On the other hand, in a common blow-molded panel, the flange has two layers, that is an inner flange layer and an outer flange layer which are separated with a distance, forming a hollow space from the top to the bottom. After the panel is manufactured through blow molded, a parting line will be formed at the bottom of the panel. Generally, such parting line is located at the bottom of the outer flange layer of the flange. After experiments, it can be seen that the firmness of the area of the parting line located is lowest, and it is easy to be broken at the area of the parting line located.

US Patent Publication No. US-2013/0081560A1 discloses a table including a molded plastic table top with an upper surface, a lower surface and a hollow interior portion disposed between the upper surface and the lower surface. The upper surface, lower surface and hollow interior portion of the table top are integrally formed during the molding process as part of a unitary, one-piece construction. The table also includes a side rail of a frame connected to the lower surface of the table top and a plurality of depressions disposed between the side rail and the upper surface of the table top. The plurality of depressions are integrally formed in the lower surface of the table top during the molding process as part of the unitary, one-piece construction. The plurality of depressions are sized and configured to support the portion of the table top disposed above the side rail of the frame.

US Patent No. US-4951576 discloses a plastic-sandwiched framework structure for constructing a portable folding table. The structure includes upper and lower plastic table top halves and a framework grid sandwiched therebetween. The table top halves are bonded or cemented to one another. The framework grid is preferably made of wood, and includes joists or beam members interconnected by cross members. The framework grid is received in a correlatively shaped shell integrally formed in the lower half of the table top. Folding legs are mounted on the underside of the table top and connected through the lower table top half to the cross members. The lower table top half is provided with gussets at selected locations between relatively high vertical walls and the adjacent horizontal planar surfaces. Stiffening ribs, which may be extensions of the shell, are also disposed on the lower table top half.

Chinese Utility Model Publication No. CN2517302Y discloses a table face plate, comprising a base plate, connectors and a face plate, wherein the base plate is connected with the connectors. The base plate is connected with the face plate through ultrasonic welding or glue adhering and the space between the base plate and the face plate is hollow. The connectors can be either connecting plates or connecting hoses for strengthening the intensity of the table face plate and the connection strength between leg mechanisms and the table face plate. The connecting manner of the connectors can be either internal connection or external connection. The base plate can be provided with a plurality of reinforcements with strip or irregular shapes. The bulges of the reinforcements are connected with the face plate through ultrasonic welding or glue adhering to strengthen the intensity of the table face plate.

### Summary of the Invention

The present invention provides a hollow blow-molded panel with a reinforced edge as claimed in claim 1.

Optional further features of the hollow blow-molded panel, and a folding table comprising the hollow blow-molded panel, are defined in the dependent claims.

A first technical problem to be solved by the present invention is to provide a blow-molded panel with reinforced edges, which has novel structure and sufficiently rigid and strong edges.

A second technical problem to be solved by the present invention is to provide a folding table using a blow-molded panel with reinforced edges. The blow-molded panel has novel structure and sufficiently rigid and strong edges.

To solve the first technical problem, the blow-molded panel with a reinforced edge, comprises a front side, a back side, and a flange extending downward on the periphery of the panel and surrounding the reinforced edge, the flange comprises: an inner flange layer having an upper portion, a lower portion and a step between these two portions; an outer flange layer having an upper curvy portion and a lower straight portion; a hollow space is formed between the upper portion of the inner flange layer and the upper curvy portion of the outer flange layer, and the lower portion of the inner flange layer is attached to the lower straight portion of the outer flange layer.

Preferably, a height of a lower portion of the flange formed by attaching the lower portion of the inner flange layer to the lower straight portion of the outer flange layer is between 1/5 to 1/4 of an overall height of the flange. Therefore, such design can ensure the strength of the flange, and can also be benefit for the mounting of the longitudinal beams.

To enhance the strength of the blow-molded panel and reduce the distortion resistance of the panel, the panel further comprises a number of recessed support touch points distributed on the back side of the panel.

Each support touch point has a strip-shape, with two reinforcing ribs placed between three contact points, each reinforcing rib being surrounded by two contact points. Therefore, such design can enhance the strength of the support touch point and reduce the distortion resistance of the panel, and also decrease the area of the contact points, and prevent the surface of the panel from having scars and thus improve the flatness of the surface of the panel.

To enhance the strength at the corners of the panel, the panel has four corners, and each corner has a corner support touch point with a linear inner side and an arc outer side. Preferably, two or more slant reinforcing ribs may be provided within each of the corner support touch points.

Two first strip-shaped grooves are provided adjacent to the flange and disposed on two opposite sides of the back side of the panel; and two second strip-shaped grooves are respectively provided between two opposite ends of the two first strip-shaped grooves. The support touch points within both the first strip-shaped grooves and the second strip-shaped grooves are placed horizontally or vertically and separated from each other. The first strip-shaped grooves and the second strip-shaped grooves are used for installing longitudinal beams and cross beams, respectively, and the support touch points within both the first strip-shaped grooves and the second strip-shaped grooves may further improve the rigidity and strength of the panel.

To be convenient for the folding of a foot stool of a folding table mated with the panel, a plurality of third strip-shaped grooves are disposed within a region enclosed by the first strip-shaped grooves and the second strip-shaped grooves on the back side of the panel, and the support touch points within the third strip-shaped grooves are placed horizontally or vertically separated from each other; and a set of feet are attached to the panel and embedded into the third strip-shaped grooves after folding. The support touch points within the strip-shaped grooves further improve the rigidity and strength of the panel.

To solve the second technical problem, the folding table using the blow-molded panel comprises two longitudinal beams, each longitudinal beam being embedded into a first strip-shaped groove of the panel and fixed to an upper portion of an inner flange layer of a flange; two cross beams, each cross beam being embedded into a second strip-shaped groove and two ends of each cross beam are connected to the two longitudinal beam; and a set of feet mounted on the two cross beams, and the set of feet are embedded into third strip-shaped grooves after folding. Under this design, the folding table is relatively firm in structure and easily folded.

The longitudinal beams mounted within the first strip-shaped grooves may adopt various structures. Preferably, each longitudinal beam has a L-shaped cross-section, which includes a vertical portion embedded into the first strip-shaped grooves and a transverse portion disposed on the step of the inner flange layer, an end of the transverse portion of each longitudinal beam touches the inner surface of the lower portion of the inner flange layer. When the folding table is stacked, the longitudinal beams embedded into the first strip-shaped grooves may effectively improve the shock resistance of the flange.

To make it easier to stack folding tables when folded, the bottom surface of each longitudinal beam is flush with a bottom surface of the flange.

Compared with the prior art, in the present invention, firstly, the flange of the hollow blow-molded panel has two layers, and the lower portion of the inner flange layer is attached to the lower straight portion of the outer flange layer with no space, after manufacture two layers are fused together becoming one layer at the lower portion of the flange, then the paring line as the prior art disappears, so that, the rigidity and the intention of the periphery of the panel can be ensured, and the firmness and the shock resistance of the fragile parts on the periphery of the panel are remarkably improved, and such design is novel; secondly, due to the first strip-shaped grooves, the second strip-shaped grooves and the strip-shaped grooves respectively formed in the back side of the panel, the set of feet can be conveniently and firmly installed, a high flatness can be kept after the panel and the set of feet are completely folded, and a plurality of folding tables can be easily stacked up after being folded accordingly.

### Brief Description of the Drawings

FIG. 1 is a perspective view of a panel according to an embodiment of the present invention;
FIG. 2 is a plan view of the panel of FIG. 1;
FIG. 3 is a partially enlarged sectional view of FIG. 2 in direction of B-B;
FIG. 4 is a partially enlarged view of part-A in FIG. 2;
FIG. 5 is a perspective view of a folding table with the panel according to the embodiment of the present invention (with a set of feet unfolded);
FIG. 6 is a perspective view of a folding table with the panel according to the embodiment of the present invention (with the set of feet folded);
FIG. 7 is a partially enlarged sectional view of FIG. 6 in direction of C-C.

### Detailed description of the preferred embodiment

To enable a further understanding of the innovative and technological content of the invention herein, refer to the detailed description of the invention and the accompanying drawings below:

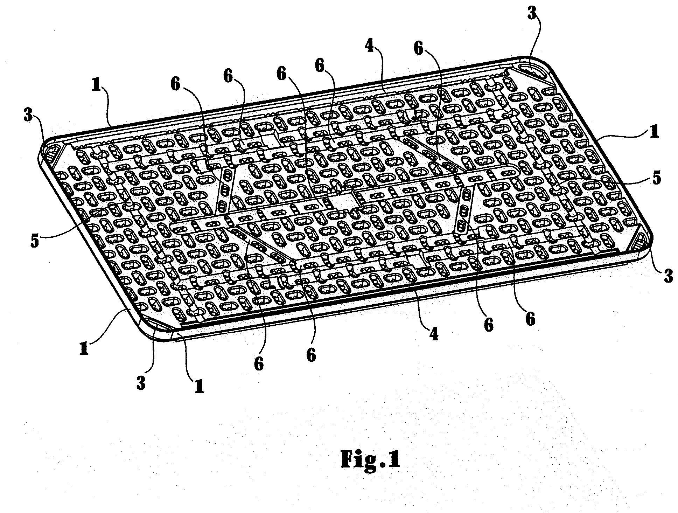

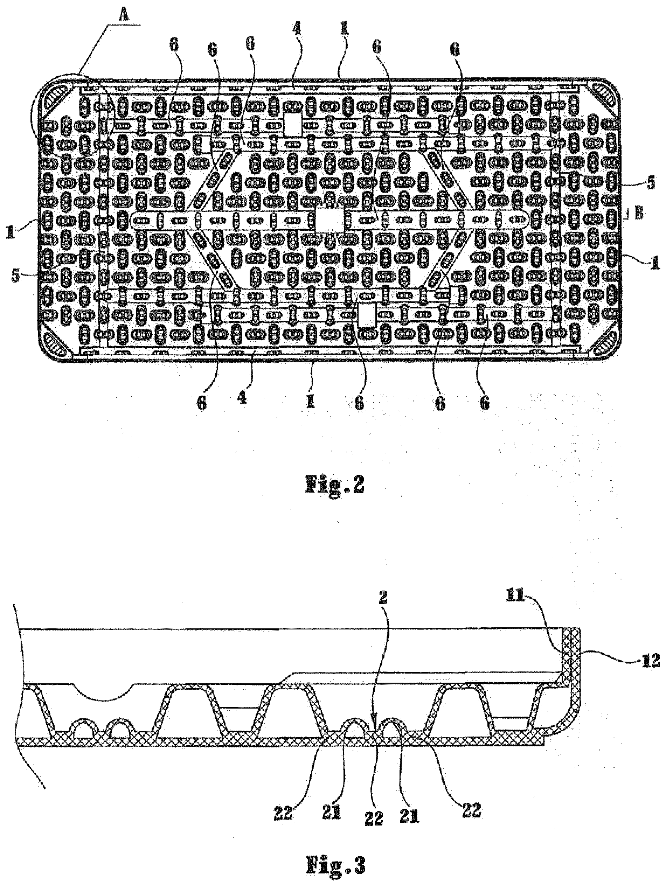

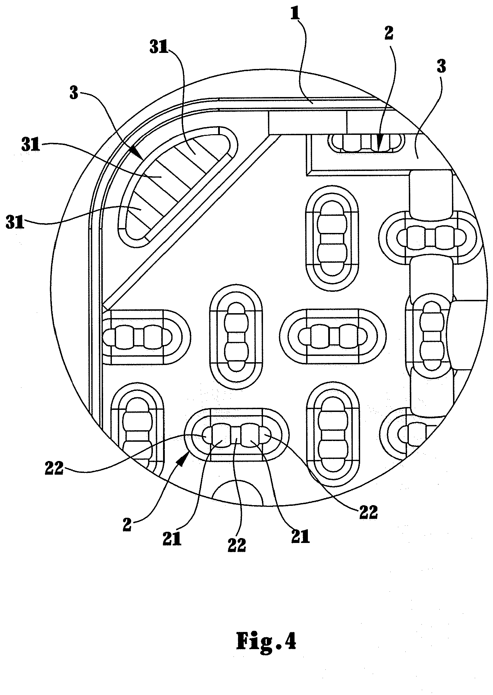

FIG.1-FIG.4 show a preferred embodiment of the panel of the present invention. A number of recessed support touch points 2 are distributed crisscross on a back side of a blow-molded panel, and the support touch points 2 are strip-shaped. The crisscross arrangement of the support touch points 2, by the cross mechanics principle, an external stress in one direction can effectively be decomposed into multiple forces in different directions being held with each other, therefore, the firmness and the distortion resistance of the panel are improved. Furthermore, under the design of the recessed support touch points 2, the wall thickness of the blow-molded panel can be reduced, and the weight of the panel can be reduced accordingly. Particularly, for an ultra-thin (thickness<40 MM) panel, under the design of the crisscross support touch points 2, the firmness of the panel can be enhanced greatly, so that it is less likely to deform. In addition, in order to improve the strength of the support touch points 2, two reinforcing ribs 21 and three touch points 22 are placed in each support touch point 2, two reinforcing ribs 21 placed between three contact points 22, each reinforcing rib 21 is surrounded by two contact points 22. So that, the area of the touch points 22 is reduced, and it is not easy to result in scars on the front face of the panel. Therefore, the flatness of the surface of the panel can be improved, and the distortion of the panel can be reduced. Of course, depending upon the specific arrangement of the support touch points 2, it is also allowable that only one reinforcing rib 21 or more than two reinforcing ribs 21 are provided within a certain support touch point 2.

To enhance the strength at the corners of the panel, the panel has four corners, each corner has a corner support touch point 3 with a linear inner side and an arc outer side. Furthermore, to further improve the strength of the corner support touch points, in this embodiment, three slant reinforcing ribs 31 are provided within each of the corner support touch points 3.

Similarly to a conventional panel, a flange 1 is extended downward on the periphery of the panel and surrounding the reinforced edge. As the periphery of the blow-molded panel is easy to be damaged, to ensure its firmness and shock resistance, in this embodiment, the flange 1 comprises an inner flange layer 11 and an outer flange layer 12. The inner flange layer 11 has an upper portion, a lower portion and a step between these two portions, and the outer flange layer 12 has an upper curvy portion and a lower straight portion. A hollow space is formed between the upper portion of the inner flange layer 11 and the upper curvy portion of the outer flange layer 12, and the lower portion of the inner flange layer 11 is attached to the lower straight portion of the outer flange layer 12. Specifically, the upper portion of the inner flange layer 11 has a distance with the upper curvy portion of the outer flange layer 12, the middle of the inner flange layer 11 bent toward the outer flange layer 12 and the step is formed between the upper portion and the lower portion of the inner flange layer 11, and the lower portion of the inner flange layer 11 is attached to the lower straight portion of the outer flange layer 12. Preferably, the height of a lower portion of the flange 1 formed by attaching the lower portion of the inner flange layer 11 to the lower straight portion of the outer flange layer 12 is between 1/5 to 1/4 of an overall height of the flange 1. Therefore, such design can ensure the strength of the flange, and can also be benefit for the mounting of the longitudinal beams.

Two first strip-shaped grooves 4 adjacent to the flange 1 and disposed on two opposite sides of the back side of the panel 1; and two second strip-shaped grooves 5 are respectively provided between two opposite ends of the two first strip-shaped grooves 4. The support touch points 2 within both the first strip-shaped grooves 4 and the second strip-shaped grooves 5 are placed horizontally or vertically and separated from each other. A plurality of third strip-shaped grooves 6 disposed within a region enclosed by the first strip-shaped grooves 4 and the second strip-shaped grooves 5 on the back side of the panel 1, and the support touch points 2 within the third strip-shaped grooves 6 are placed horizontally or vertically separated from each other; and a set of feet 9 attached to the panel and embedded into the third strip-shaped grooves 6 after folded.

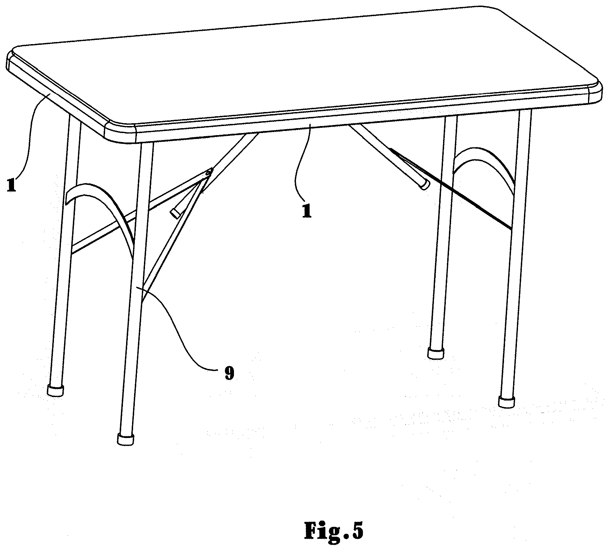

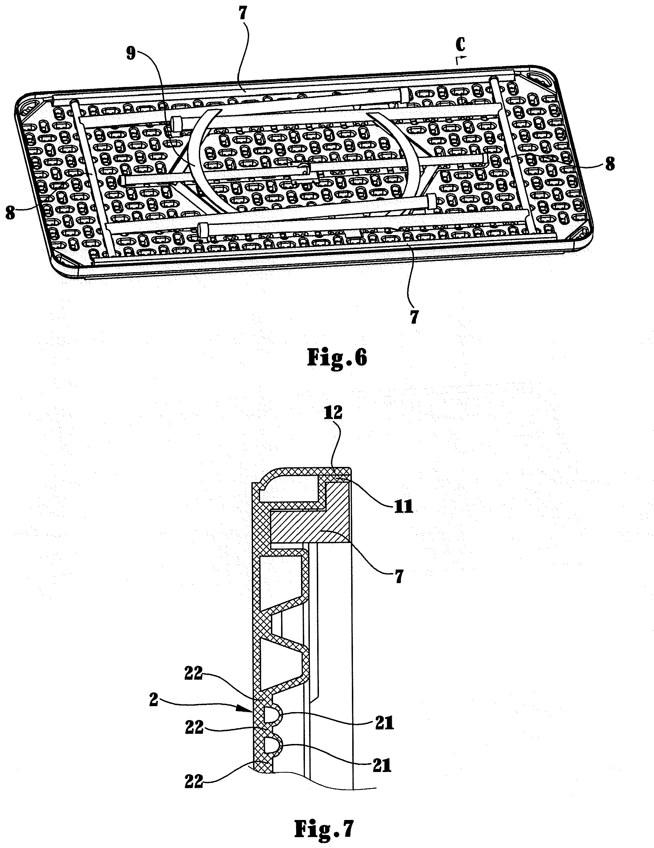

FIG. 5-FIG. 7 show a preferred embodiment of the folding table with the above stated panel of the present invention. The folding table with the blow-molded panel, comprises two longitudinal beams 7, each longitudinal beam being embedded into a first strip-shaped groove 4 of the panel 1 and fixed to an upper portion of an inner flange layer 11 of a flange 1; two cross beams 8, each cross beam being embedded into a second strip-shaped groove 5 and two ends of each cross beam 8 are connected to the two longitudinal beam 7; and a set of feet 9 mounted on the two cross beams 8, and the set of feet 9 is embedded into third strip-shaped grooves 6 after folded. The movably folding foot stool is substantially the same as the set of feet structure of an existing stable stand, and will not be repeated here. High flatness can be kept after the panel and the foot stool are completely folded, and a plurality of folding tables can be easily stacked after being folded accordingly. In addition, to further improve the shock resistance of the flange 1, each longitudinal beam 7 has a L-shaped cross-section, which includes a vertical portion 71 embedded into the first strip-shaped grooves 4 and a transverse portion 72 disposed on the step of the inner flange layer 11, an end of the transverse portion 72 of each longitudinal beam 7 touches the inner surface of the lower portion of the inner flange layer 11, and the bottom surface 73 of each longitudinal beam 7 is flush with a bottom surface of the flange 1.

## Claims

1. A hollow blow-molded panel with a reinforced edge, comprising a front side, a back side, and a flange (1) extending downward on the periphery of the panel and surrounding the reinforced edge, the flange comprising:
an inner flange layer (11) having an upper portion, a lower portion and a step between the two portions; and
an outer flange layer (12) having an upper curvy portion and a lower straight portion;
in which:
the upper portion of the inner flange layer (11) is distanced from the upper curvy portion of the outer flange layer (12), a hollow space being formed between the upper portion of the inner flange layer (11) and the upper curvy portion of the outer flange layer (12);
a middle of the inner flange layer (11) is bent towards the outer flange layer (12) and the step is formed between the upper portion and the lower portion of the inner flange layer (11);
the lower portion of the inner flange layer (11) is attached to the lower straight portion of the outer flange layer (12) with no space between, the lower portion of the inner flange layer (11) and the lower straight portion of the outer flange layer (12) being fused together to form one layer at a lower portion of the flange;
and in which the hollow blow-molded panel further comprises:
recessed support touch points (2) distributed on the back side of the panel, each support touch point (2) having a strip-shape, and two reinforcing ribs (21) placed between three contact points (22), each reinforcing rib (21) being surrounded by two contact points;
two first strip-shaped grooves (4) are provided adjacent to the flange (1) and disposed on two opposite sides of the back side of the panel (1);
two second strip-shaped grooves (5) are respectively provided between two opposite ends of the two first strip-shaped grooves (4);
support touch points (2) are provided within both the first strip-shaped grooves (4) and the second strip-shaped grooves (5), the support touch points being placed horizontally or vertically and separated from each other;
a plurality of third strip-shaped grooves (6) are disposed within a region enclosed by the first strip-shaped grooves (4) and the second strip-shaped grooves (5) on the back side of the panel (1), support touch points (2) within the third strip-shaped grooves (6) being placed horizontally or vertically and separated from each other;
a set of feet (9) are attached to the panel and embedded into the third strip-shaped grooves (6) after folding; and
the panel has four corners, each corner having a corner support touch point (3) with a linear inner side and an arc outer side.

2. The panel according to claim 1, in which the height of a lower portion of the flange (1) formed by attaching the lower portion of the inner flange layer to the lower straight portion of the outer flange layer is between 1/5 to 1/4 of an overall height of the flange (1).

3. A folding table comprising the hollow blow-molded panel according to claim 1, the folding table comprising:
two longitudinal beams (7), each longitudinal beam being embedded into one of the first strip-shaped grooves (4) of the panel (1) and fixed to the upper portion of the inner flange layer (11) of the flange (1);
two cross beams (8), each cross beam being embedded into one of the second strip-shaped grooves (5) and two ends of each cross beam (8) being connected to the two longitudinal beams (7); and
in which the set of feet (9) are mounted on the two cross beams (8), the set of feet (9) being embedded into the third strip-shaped grooves (6) after being folded.

4. The folding table according to claim 3, in which each longitudinal beam (7) has an L-shaped cross-section, which includes a vertical portion (71) embedded into the first strip-shaped grooves (4) and a transverse portion (72) disposed on the step of the inner flange layer (11), in which an end of the transverse portion (72) of each longitudinal beam (7) touches the inner surface of the lower portion of the inner flange layer (11).

5. The folding table according to claim 4, in which the bottom surface (73) of each longitudinal beam (7) is flush with a bottom surface of the flange (1).

## Patentansprüche

1. Hohle blasgeformte Platte mit einer verstärkten Kante, umfassend eine Vorderseite, eine Rückseite, und einen sich am Umfang der Platte nach unten erstreckenden und die verstärkte Kante umgebenden Kragen (1), wobei der Kragen umfasst:
eine innere Kragenschicht (11), welche einen oberen Abschnitt, einen unteren Abschnitt und eine zwischen den zwei Abschnitten angeordnete Stufe aufweist, und
eine äußere Kragenschicht (12), welche einen oberen gekurvten Abschnitt und einen unteren geraden Abschnitt aufweist;
bei dem:
der obere Abschnitt der inneren Kragenschicht (11) von dem oberen gekurvten Abschnitt der äußeren Kragenschicht (12) beabstandet ist, wobei ein Hohlraum zwischen dem oberen Abschnitt der inneren Kragenschicht (11) und dem oberen gekurvten Abschnitt der äußeren Kragenschicht (12) gebildet ist;
wobei eine Mitte der inneren Kragenschicht (11) zu der äußeren Kragenschicht (12) hin gebogen ist und die Stufe zwischen dem oberen Abschnitt und dem unteren Abschnitt der inneren Kragenschicht (11) gebildet ist;
wobei der untere Abschnitt der inneren Kragenschicht (11) an den unteren geraden Abschnitt der äußeren Kragenschicht (12) ohne Abstand dazwischen angefügt ist, wobei der untere Abschnitt der inneren Kragenschicht (11) und der untere gerade Abschnitt der äußeren Kragenschicht (12) miteinander verschmolzen sind, um eine Schicht an einem unteren Abschnitt des Kragens zu bilden;
wobei die hohle blasgeformte Platte weiter umfasst:
vertiefte Stützberührungspunkte (2), welche auf der Rückseite der Platte verteilt sind, wobei jeder Stützberührungspunkt (2) eine Streifenform aufweist, und wobei zwei Verstärkungsrippen (21) zwischen drei Kontaktpunkten (22) angeordnet sind, wobei jede Verstärkungsrippe (21) von zwei Kontaktpunkten umgeben ist,
wobei zwei erste streifenförmige Nuten (4) benachbart zu dem Kragen (1) vorgesehen und auf zwei gegenüberliegenden Seiten der Rückseite der Platte (1) angeordnet sind;
wobei zwei zweite streifenförmige Nuten (5) jeweils zwischen zwei gegenüberliegenden Enden der zwei ersten streifenförmige Nuten (4) vorgesehen sind;
wobei Stützberührungspunkte (2) sowohl innerhalb der ersten streifenförmigen Nuten (4) als auch innerhalb der zweiten streifenförmigen Nuten (5) vorgesehen sind, wobei die Stützberührungspunkte horizontal oder vertikal und voneinander getrennt angeordnet sind;
wobei eine Vielzahl von dritten streifenförmigen Nuten (6) innerhalb eines von den ersten streifenförmigen Nuten (4) und den zweiten streifenförmigen Nuten (5) auf der Rückseite der Platte (1) eingeschlossenen Bereiches angeordnet sind, wobei Stützberührungspunkte (2) innerhalb der dritten streifenförmigen Nuten (6) horizontal oder vertikal und voneinander getrennt angeordnet sind;
wobei ein Satz Füße (9) an die Platte angeschlossen und nach Klappen in den dritten streifenförmigen Nuten (6) eingebettet sind; und
wobei die Platte vier Ecken aufweist, wobei jede Ecke einen Eckenstützberührungspunkt (3) mit einer geradlinigen Innenseite und einer gebogenen Außenseite aufweist.

2. Platte nach Anspruch 1, bei der die Höhe des unteren Abschnitts des Kragens (1), welcher durch Anfügen des unteren Abschnitts der inneren Kragenschicht an den unteren geraden Abschnitt der äußeren Kragenschicht gebildet wird, zwischen 1/5 und einem 1/4 der Gesamthöhe des Kragen (1) beträgt.

3. Klapptisch, umfassend die hohle blasgeformte Platte nach Anspruch 1, wobei der Klapptisch umfasst:
zwei Längsträger (7), wobei jeder Längsträger in eine der ersten streifenförmigen Nuten (4) der Platte (1) eingebettet ist und an dem oberen Abschnitt der inneren Kragenschicht (11) des Kragens (1) befestigt ist;
zwei Querträger (8), wobei jeder Querträger in eine der zweiten streifenförmigen Nuten (5) eingebettet ist und zwei Enden jedes Querträgers (8) an die zwei Längsträger (7) angeschlossen sind; und
wobei der Satz Füße (9) an den zwei Querträgern (8) befestigt sind, wobei der Satz Füße (9) nach Klappen in den dritten streifenförmigen Nuten (6) eingebettet sind.

4. Klapptisch nach Anspruch 3, bei dem jeder Längsträger (7) einen L-förmigen Querschnitt aufweist, welcher einen in den ersten streifenförmigen Nuten (4) eingebetteten vertikalen Abschnitt (71) und einen auf der Stufe der inneren Kragenschicht (11) angeordneten quer verlaufenden Abschnitt (72) aufweist, bei dem ein Ende des quer verlaufenden Abschnitts (72) jedes Längsträgers (7) die Innenseite des unteren Abschnitts der inneren Kragenschicht (11) berührt.

5. Klapptisch nach Anspruch 4, bei dem die Unterseite (73) jedes Längsträgers (7) bündig mit einer Unterseite des Kragens (1) abschließt.

## Revendications

1. Panneau creux moulé par soufflage doté d'un bord renforcé, comprenant un côté avant, un côté arrière et un rebord (1) s'étendant vers le bas sur la périphérie du panneau et entourant le bord renforcé, le rebord comprenant :
une couche de rebord interne (11) ayant une partie supérieure, une partie inférieure et un gradin entre les deux parties ; et
une couche de rebord externe (12) ayant une partie incurvée supérieure et une partie droite inférieure ;
dans lequel :
la partie supérieure de la couche de rebord interne (11) est à distance de la partie incurvée supérieure de la couche de rebord externe (12), un espace creux étant formé entre la partie supérieure de la couche de rebord interne (11) et la partie incurvée supérieure de la couche de rebord externe (12) ;
un milieu de la couche de rebord interne (11) est courbée vers la couche de rebord externe (12) et le gradin est formé entre la partie supérieure et la partie inférieure de la couche de rebord interne (11) ;
la partie inférieure de la couche de rebord interne (11) est attachée à la partie droite inférieure de la couche de rebord externe (12) sans aucun espace entre, la partie inférieure de la couche de rebord interne (11) et la partie droite inférieure de la couche de rebord externe (12) étant fusionnées ensemble pour former une seule couche au niveau d'une partie inférieure du rebord ;
et où le panneau creux moulé par soufflage comprend en outre :
des points de contact de support (2) en évidement répartis sur le côté arrière du panneau, chaque point de contact de support (2) ayant une forme de bande, et deux nervures de renforcement (21) placées entre trois points de contact (22), chaque nervure de renforcement (21) étant entourée de deux points de contact ;
deux premières rainures en forme de bande (4) sont prévues de manière adjacente au rebord (1) et disposées sur deux côtés opposés du côté arrière du panneau (1) ;
deux deuxièmes rainures en forme de bande (5) sont respectivement prévues entre deux extrémités opposées des deux premières rainures en forme de bande (4) ;
des points de contact de support (2) sont prévus à l'intérieur à la fois des premières rainures en forme de bande (4) et des deuxièmes rainures en forme de bande (5), les points de contact de support étant placés horizontalement ou verticalement et séparés les uns des autres :
une pluralité de troisièmes rainures en forme de bande (6) sont disposées dans une région délimitée par les premières rainures en forme de bande (4) et les deuxièmes rainures en forme de bande (5) sur le côté arrière du panneau (1), des points de contact de support (2) à l'intérieur des troisièmes rainures en forme de bande (6) étant placés horizontalement ou verticalement et séparés les uns des autres ;
un ensemble de pieds (9) sont attachés au panneau et intégrés dans les troisièmes rainures en forme de bande (6) après pliage ; et
le panneau a quatre coins, chaque coin ayant un point de contact de support de coin (3) doté d'un côté interne linéaire et d'un côté externe arqué.

2. Panneau selon la revendication 1, dans lequel la hauteur d'une partie inférieure du rebord (1) formée en attachant la partie inférieure de la couche de rebord interne à la partie droite inférieure de la couche de rebord externe est comprise entre 1/5 et 1/4 de la hauteur totale du rebord (1).

3. Table pliante comprenant le panneau creux moulé par soufflage selon la revendication 1, la table pliante comprenant :
deux poutres longitudinales (7), chaque poutre longitudinale étant intégrée dans l'une des premières rainures en forme de bande (4) du panneau (1) et fixée à la partie supérieure de la couche de rebord interne (11) du rebord (1) ;
deux poutres transversales (8), chaque poutre transversale étant intégrée dans l'une des deuxièmes rainures en forme de bande (5) et deux extrémités de chaque poutre transversale (8) étant reliées aux deux poutres longitudinales (7) ; et
où l'ensemble de pieds (9) sont montés sur les deux poutres transversales (8), l'ensemble de pieds (9) étant intégrés dans les troisièmes rainures en forme de bande (6) après avoir été pliés.

4. Table pliante selon la revendication 3, dans laquelle chaque poutre longitudinale (7) a une section transversale en forme de L, qui comporte une partie verticale (71) intégrée dans les premières rainures en forme de bande (4) et une partie transversale (72) disposée sur le gradin de la couche de rebord interne (11), dans laquelle une extrémité de la partie transversale (72) de chaque poutre longitudinale (7) touche la surface interne de la partie inférieure de la couche de rebord interne (11) .

5. Table pliante selon la revendication 4, dans laquelle la surface de fond (73) de chaque poutre longitudinale (7) est à niveau avec une surface de fond du rebord (1).
